# EUROPEAN PATENT SPECIFICATION

(11) **EP 3 016 498 B1**
(45) Date of publication and mention of the grant of the patent: **21.06.2017**
(21) Application number: 14762110.6
(22) Date of filing: 02.07.2014
(51) Int. Cl.: A01G 9/12

(54) **DEVICE FOR SUSPENDING A PLANT**
VORRICHTUNG ZUM AUFHÄNGEN VON PFLANZEN
DISPOSITIF DE SUSPENSION DES PLANTES

(30) Priority: 04.07.2013 NL 2011088
(43) Date of publication of application: 11.05.2016
(73) Proprietor: Textielbedrijf Het Langeloo B.V., 7481 VE Haaksbergen (NL)
(72) Inventor: KLAVER, Catharina Josephine Jantina Karin, NL-7481 VE Haaksbergen (NL); KLAVER, Jochem, deceased (NL)
(74) Representative: Mink-Lindenburg, Charlotte Hildegard
(86) International application number: PCT/NL2014/050433
(87) International publication number: WO 2015/002533

(56) References cited:
- EP-A1- 0 001 703
- EP-A1- 0 343 285
- EP-A1- 0 349 029
- WO-A1-03/105570
- WO-A1-2011/013325
- ES-A1- 2 334 088
- JP-A- 2001 145 427
- JP-A- 2007 282 558
- NL-C2- 1 018 107

## Description

The invention relates to a device for suspending a plant, for instance a tomato plant, comprising a housing in which a wire reel can be removably arranged, wire dispensing means for dispensing a wire wound onto the wire reel close to an underside of the device and suspending means close to an upper side of the device for suspending the device. EP0349029 discloses such a device for suspending a plant. The device according to the preamble of claim 1 is known in the field and is marketed under the name "tomahoak®". This device is applied particularly for suspending tomato plants.

The known device has the drawback that the wire from which a tomato plant hangs has to be lifted in order to operate the wire dispensing means. Lifting the wire causes shoulder, arm or neck disorders because the full weight of the tomato plant rests on the wire. When the tomato plant is fully grown this weight can amount to an average of seven kilograms.

Another drawback of the known device is that unwinding of the wire does not take place smoothly, whereby there is a chance of almost ripe tomatoes falling off the plant as a result of the unwinding of the wire. The tomatoes which have fallen off the plant may no longer be used for consumption and can thus be considered lost.

The device according to the invention has for its object to provide an alternative to the known device which does not have the above stated drawbacks.

The inventive device has for this purpose the feature that the housing is provided with a first passage for guiding the wire to the outer side of the housing, the housing is configured to guide the wire over at least a part of the outer side of the housing to the underside thereof, and that the wire dispensing means are configured to clamp the wire in manually adjustable manner on the outer side of the housing. As a result of these inventive measures a user can manually control the dispensing of wire from the device without lifting the plant, whereby the device is easier to use and does not cause shoulder, arm or neck disorders.

In addition, the wire can be unwound smoothly and without jolting with the inventive device, whereby no parts (such as ripe tomatoes in the case of a tomato plant) fall off the plant. Because the wire is guided over at least a part of the outer side of the housing, a braking of the wire is caused during unwinding. The unwinding can hereby take place at a rate which the user can keep up with.

In a first embodiment of the device according to the invention the housing is provided with a first passage for guiding the wire to the outer side of the housing and the wire dispensing means comprise a sleeve at least partially enclosing the housing, wherein the sleeve and the housing are configured for co-action for the purpose of adjustably closing or leaving the first passage clear while clamping the wire. These measures further enhance the convenience of use of the inventive device. The user can clamp or release the wire by operating the sleeve, such as by rotation or displacement relative to the housing.

In a second embodiment of the device according to the invention the housing is provided close to an underside with a second passage and during operation of the device the wire is guided round the housing via the second passage to the inner side of the housing by means of at least one winding and then exits from the underside of the device. These measures ensure that the wire lies against the housing and that the wire is braked during unwinding from the wire reel. It is hereby possible to prevent a heavy plant being pulled downward too quickly by gravitational force.

A winding of the wire round the housing provides for a determined drag on the wire. One winding can be sufficient for application of the device in the case of a light plant. For application of the device in the case of a heavier plant the wire can be wound around the housing several times. The device according to the invention can hereby be applied for both a light and a heavy plant.

In a first preferred embodiment of the device according to the invention the sleeve comprises a recess which forms approximately a right-angled triangle, a first leg of which runs parallel to the longitudinal direction of the sleeve and a second leg runs parallel and adjacent to an underside of the sleeve such that, in the situation where the wire is not clamped, the first passage lies close to the angle between the first leg and the inclining side of the triangular recess. These measures optimize the user-friendliness of the device in inventive manner. Since in the situation where the wire is not clamped the first passage lies close to the angle between the first leg and the inclining side of the triangular recess, the wire can be freely dispensed in a direction which follows the winding round the housing. The wire is not hereby obstructed by the sleeve during unwinding thereof.

The first passage is preferably elongate and the first passage runs from the top side of the housing. The outer end of the wire can hereby be moved directly outside the housing during arranging of the wire reel.

The housing and the inner side of the sleeve are preferably of cylindrical form, whereby the sleeve can co-act slidably or rotatably with the housing.

In an alternative embodiment of the device according to the invention the wire dispensing means comprise a slide element which protrudes into the first passage and is slidable along the outer side of the housing such that the slide element is movable between a first position, in which the wire is released, and a second position in which the wire is clamped between the slide element and the outer side of the housing. These technical measures make it possible to operate the device according to the invention with one hand, thereby enormously enhancing the user-friendliness of the device.

The first passage of the alternative embodiment is preferably provided with a first channel which runs substantially in the direction of the longitudinal side of the housing and which is configured to guide the slide element (16) to the second position. These technical measures indicate to the user of the inventive device a direction for sliding the slide element to the second position, whereby the user-friendliness of the inventive device is further enhanced.

In a second preferred embodiment of the device according to the invention the first passage is provided with a second channel directed away from the first channel and configured to guide the slide element to the first position. These technical measures indicate to the user of the inventive device a direction for sliding of the slide element to the first position, whereby the user-friendliness of the inventive device is enhanced still further. As a result of these technical measures the wire can in addition also be guided more easily from the inner side of the housing via the passage to the outer side of the housing by means of placing the slide element in the first position, this without components of the device having to be removed.

The device will be further elucidated with reference to the following figure, in which:
Figure 1 shows a view of the first preferred embodiment of the device according to the invention;
Figure 2A shows a view of the second preferred embodiment of the device according to the invention.
Figure 2B shows a view of the slide element of the device according to the invention.

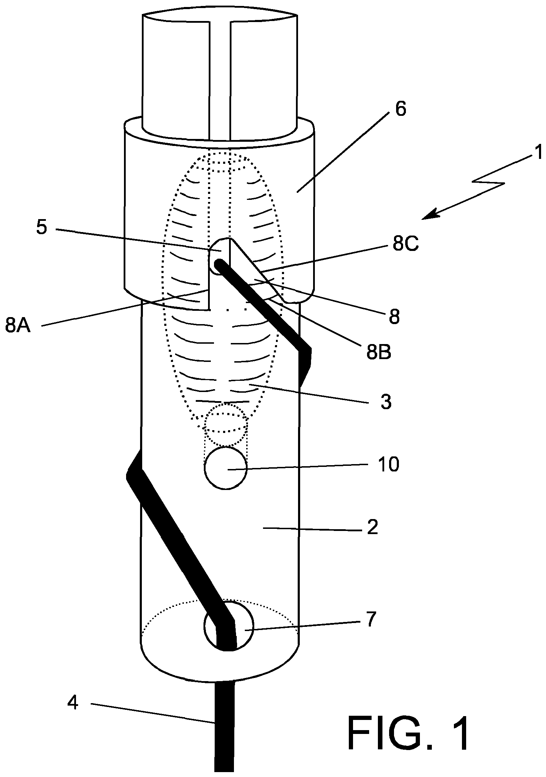

Figure 1 shows a view of the first preferred embodiment of device 1 according to the invention. Device 1 comprises a cylindrical housing 2 in which a wire reel 3 can be removably arranged. The wire dispensing means for dispensing a wire 4 wound onto the wire reel close to an underside of housing 1 are formed by a sleeve 6 with a cylindrical inner side which is mounted rotatably on housing 2. The suspending means are mounted on the upper side of the housing and are not drawn. The suspending means can for instance be embodied as a hole in housing 2 or a hook on housing 2. Housing 2 is configured to guide the wire 4 over at least a part of the outer side of housing 2 to the underside thereof. Sleeve 6 and housing 2 are configured to co-act for the purpose of adjustably closing or leaving the first passage clear while clamping wire 4. Housing 2 is provided with a first passage 5 for guiding the wire to the outer side of housing 2. During operation of device 1 wire 4 is guided round housing 2 via a second passage 7 in housing 2 to the inner side of housing 2 by means of at least one winding, and then exits from the underside of housing 2. The sleeve comprises a recess 8 which forms approximately a right-angled triangle, of which a first leg 8A runs parallel to the longitudinal direction of sleeve 6 and a second leg 8B runs parallel and adjacent to an underside of sleeve 6 such that, in the situation where wire 4 is not clamped, the first passage lies close to the angle between the first leg 8A and the inclining side 8C of triangular recess 8. For easy throughfeed of wire 4 from the inner side to the outer side of housing 2, first passage 5 is elongate and runs from the top side of housing 2. Housing 2 is also provided with a stop 10 for holding wire reel 3 at a height in housing 2.

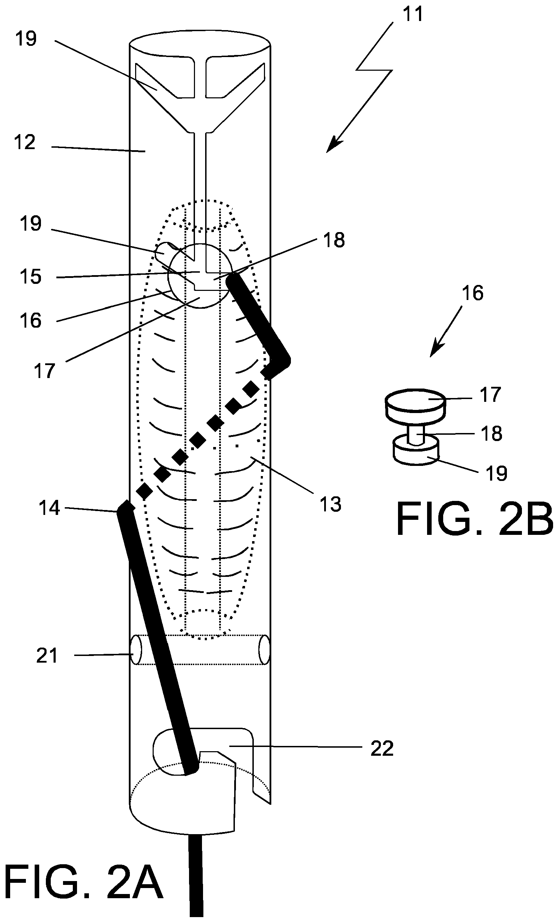

Figure 2A shows a view of the second preferred embodiment 11 of the device according to the invention. Device 11 comprises a cylindrical housing 12 in which a wire coil 13 can be removably arranged. Housing 12 is provided with a first passage 15 for guiding the wire to the outer side of housing 12. The wire dispensing means for dispensing a wire 14 wound onto the wire reel close to an underside of housing 11 are formed by a slidable element 16 protruding into housing 12. Outer side 17 of slidable element 16 is shown transparently so that first passage 15 is visible. Suspending means 19 are mounted on the top side of housing 12. Housing 12 is configured to guide the wire 14 over at least a part of the outer side of housing 12 to the underside thereof. Slide element 16 is movable between a first position, in which wire 14 is released, and a second position in which wire 14 is clamped between slide element 16 and the outer side of housing 12. First passage 15 is provided with a first channel 18 which runs substantially in the direction of the longitudinal side of housing 12 and wherein the first channel 18 is configured to guide slide element 16 to the second position. First passage 15 is provided with a second channel 19 directed away from first channel 18 and configured to guide slide element 16 to the first position. Housing 12 is also provided with a stop 21 for holding wire reel 13 at a height in housing 12. During operation of device 11, wire 14 is guided round housing 12 via a second passage 22 in housing 12 to the inner side of housing 12 by means of at least one winding and then exits from the underside of housing 12.

Figure 2B shows a view of slide element 16 of the device according to the invention. Slide element 16 comprises at least one outer part 17 intended for the purpose of clamping the wire 14 between outer part 17 and the outer periphery of housing 12, a shaft part 18 having substantially the same thickness as housing 12 and an inner part 19 which prevents slide element 16 being taken out of passage 15.

The invention is expressly not limited to a rotatable sleeve in a cylindrical housing. Any other form of clamping of the wire to the housing is possible. The sleeve can thus also be arranged slidably in a housing, wherein the housing need not be cylindrical. An elliptical housing and ditto sleeve can also be applied.

The general inventive concept lies in the application of friction of the wire caused by the housing part, whereby this latter together with the sleeve or slide element forms a brake. The wire can hereby be dispensed in a simple manner.

## Claims

1. Device (1, 11) for suspending a plant, for instance a tomato plant, comprising a housing (2, 12) in which a wire reel (3, 13) can be removably arranged, wire dispensing means for dispensing a wire (4, 14) wound onto the wire reel (3, 13) close to an underside of the housing (2, 12) and suspending means close to an upper side of the device (1, 11) for suspending the device (1, 11), wherein the housing (2, 12) is provided with a first passage (5, 15) for guiding the wire (4, 14) to the outer side of the housing (2, 12), the housing (2, 12) is configured to guide the wire (4, 14) over at least a part of the outer side of the housing (2, 12) to the underside thereof, and that the wire dispensing means are configured to clamp the wire (4, 14) in manually adjustable manner on the outer side of the housing (2, 12), **characterized in that** the wire dispensing means are movable with respect to the part of the outer side of the housing (2, 12) to form a brake for dispensing the wire (4, 14) from the device without lifting the plant.

2. Device (1) as claimed in claim 1, **characterized in that** the wire dispensing means comprise a sleeve (6) at least partially enclosing the housing (2), wherein the sleeve (6) and the housing (2) are configured for co-action for the purpose of adjustably closing or leaving the first passage (5) clear while clamping the wire (4).

3. Device (1) as claimed in claim 2, **characterized in that** the housing (2) is provided close to the underside with a second passage (7) and that during operation of the device (1) the wire (4) is guided round the housing (2) via the second passage (7) to the inner side of the housing (2) by means of at least one winding and exits from the underside of the housing (2).

4. Device (1) as claimed in claim 2 or 3, **characterized in that** the sleeve (6) comprises a recess (8) which forms approximately a right-angled triangle, a first leg (8A) of which runs parallel to the longitudinal direction of the sleeve (6) and a second leg (8B) runs parallel and adjacent to an underside of the sleeve (6) such that, in the situation where the wire (4) is not clamped, the first passage (5) lies close to the angle between the first leg and the inclining side (8C) of the triangular recess (8).

5. Device (1) as claimed in claim 1, 2, 3 or 4, wherein the first passage (5) is elongate and runs from the top side of the housing (2).

6. Device (1) as claimed in claim 2, 3, 4 or 5, wherein the housing (2) and the inner side of the sleeve (6) are of cylindrical form.

7. Device (11) as claimed in claim 1, **characterized in that** the wire dispensing means comprise a slide element (16) which protrudes into the first passage (15) and is slidable along the outer side of the housing (12) such that the slide element (16) is movable between a first position, in which the wire (14) is released, and a second position in which the wire (14) is clamped between the slide element (16) and the outer side of the housing (12).

8. Device (11) as claimed in claim 7, wherein the first passage (15) is provided with a first channel (18) which runs substantially in the direction of the longitudinal side of the housing (12) and the first channel (18) is configured to guide the slide element (16) to the second position.

9. Device (11) as claimed in claim 7 or 8, wherein the first passage (15) is provided with a second channel (19) directed away from the first channel (18) and configured to guide the slide element (16) to the first position.

## Patentansprüche

1. Vorrichtung (1, 11) zum Aufhängen einer Pflanze, beispielsweise einer Tomatenpflanze, umfassend ein Gehäuse (2, 12), in dem eine Drahtspule (3, 13) entfernbar angeordnet werden kann, Drahtabgabemittel zum Abgeben eines auf die Drahtspule (3, 13) gewickelten Drahtes (4, 14) in der Nähe einer Unterseite des Gehäuses (2, 12) und Aufhängemittel in der Nähe einer Oberseite der Vorrichtung (1, 11) zum Aufhängen der Vorrichtung (1, 11), wobei das Gehäuse (2, 12) mit einem ersten Durchgang (5, 15) zum Führen des Drahtes (4, 14) zur Außenseite des Gehäuses (2, 12) versehen ist, wobei das Gehäuse (2, 12) ausgebildet ist, um den Draht (4, 14) über mindestens einen Teil der Außenseite des Gehäuses (2, 12) zu dessen Unterseite hin zu führen und dass die Drahtabgabemittel so ausgebildet sind, dass sie den Draht (4, 14) auf der Außenseite des Gehäuses (2, 12) manuell einstellbar klemmen, **dadurch gekennzeichnet, dass** die Drahtabgabemittel relativ zu dem Teil der Außenseite des Gehäuses (2, 12) beweglich sind, um eine Bremse für die Abgabe des Drahtes (4, 14) zu bilden, ohne die Pflanze anzuheben.

2. Vorrichtung (1) nach Anspruch 1, **dadurch gekennzeichnet, dass** die Drahtabgabemittel eine das Gehäuse (2) zumindest teilweise umschließende Hülse (6) aufweist, wobei die Hülse (6) und das Gehäuse (2) ausgebildet sind, um zusammenzuwirken, um den ersten Durchgang (5) beim Einspannen des Drahtes (4) einstellbar zu schließen oder frei zu lassen.

3. Vorrichtung (1) nach Anspruch 2, **dadurch gekennzeichnet, dass** das Gehäuse (2) nahe der Unterseite mit einem zweiten Durchgang (7) versehen ist und dass während des Betriebes der Vorrichtung (1) der Draht (4) um das Gehäuse (2) über den zweiten Durchgang (7) zu der Innenseite des Gehäuses (2) über mindestens eine Wicklung verläuft und an der Unterseite des Gehäuses (2) austritt.

4. Vorrichtung (1) nach Anspruch 2 oder 3, **dadurch gekennzeichnet, dass** die Hülse (6) eine Ausnehmung (8) aufweist, die etwa ein rechtwinkliges Dreieck ausbildet, dessen erster Schenkel (8A) parallel zur Längsrichtung der Hülse (6) verläuft und ein zweiter Schenkel (8B) parallel und benachbart zu einer Unterseite der Hülse (6) verläuft, so dass in dem Fall, in dem der Draht (4) nicht geklemmt ist, der erste Durchgang (5) in der Nähe des Winkels zwischen dem ersten Schenkel und der geneigten Seite (8C) der dreieckigen Ausnehmung (8) liegt.

5. Vorrichtung (1) nach Anspruch 1, 2, 3 oder 4, wobei der erste Durchgang (5) langgestreckt ist und sich von der Oberseite des Gehäuses (2) erstreckt.

6. Vorrichtung (1) nach Anspruch 2, 3, 4 oder 5, wobei das Gehäuse (2) und die Innenseite der Hülse (6) von zylindrischer Form sind.

7. Vorrichtung (11) nach Anspruch 1, **dadurch gekennzeichnet, dass** die Drahtabgabemittel ein in den ersten Durchgang (15) hineinragendes Schiebeelement (16) umfassen, das entlang der Außenseite des Gehäuses (12) derart verschiebbar ist, so dass das Schiebeelement (16) zwischen einer ersten Position, in der der Draht (14) gelöst ist, und einer zweiten Position, in der der Draht (14) zwischen dem Schiebeelement (16) und der Außenseite des Gehäuses (12) geklemmt ist, bewegbar ist.

8. Vorrichtung (11) nach Anspruch 7, wobei der erste Durchgang (15) mit einem ersten Kanal (18) versehen ist, der im Wesentlichen in Richtung der Längsseite des Gehäuses (12) verläuft und der erste Kanal (18) ausgebildet ist, um das Schiebeelement (16) in die zweite Position zu führen.

9. Vorrichtung (11) nach Anspruch 7 oder 8, wobei der erste Durchgang (15) mit einem vom ersten Kanal (18) abgewandten zweiten Kanal (19) versehen ist, der ausgebildet ist, um das Schiebeelement (16) in die erste Position zu führen.

## Revendications

1. Dispositif (1, 11) pour suspendre une plante, par exemple un plant de tomate, comprenant un boîtier (2, 12) dans lequel une bobine de fil (3, 13) peut être agencée de manière amovible, des moyens de distribution de fil pour distribuer un fil (4, 14) enroulé sur la bobine de fil (3, 13) à proximité d'un côté inférieur du boîtier (2, 12) et des moyens de suspension proches d'un côté supérieur du dispositif (1, 11) pour suspendre le dispositif (1, 11), dans lequel le boitier (2, 12) est pourvu d'un premier passage (5, 15) pour guider le fil (4, 14) sur le côté extérieur du boitier (2, 12), le boitier (2, 12) est configuré pour guider le fil (4, 14) sur au moins une partie du côté extérieur du boitier (2, 12) vers le côté inférieur de celui-ci et les moyens de distribution de fil sont configurés pour serrer le fil (4, 14) de manière réglable manuellement sur le côté extérieur du boitier (2, 12) **caractérisé en ce que** les moyens de distribution de fil sont mobiles par rapport à la partie du côté extérieur du boitier (2, 12) pour former un frein pour la distribution du fil (4, 14) de l'appareil sans soulever la plante.

2. Dispositif (1) selon la revendication 1, **caractérisé en ce que** les moyens de distribution de fil comprennent un manchon (6) entourant au moins partiellement le boîtier (2), dans lequel le manchon (6) et le boîtier (2) sont configurés pour co-agir dans le but de fermer de manière réglable ou de laisser le premier passage (5) dégagé tout en serrant le fil (4).

3. Dispositif (1) selon la revendication 2, **caractérisé en ce que** le boîtier (2) est prévu à proximité du côté inférieur avec un second passage (7) et que pendant le fonctionnement du dispositif (1), le fil (4) est guidé autour du boitier (2) via le second passage (7) vers le côté intérieur du boîtier (2) au moyen d'au moins un enroulement, et sort de la face inférieure du boîtier (2).

4. Dispositif (1) selon la revendication 2 ou 3, **caractérisé en ce que** le manchon (6) comprend un évidemment (8) qui forme approximativement un triangle à angle droit, dont une première arête (8A) s'étend parallèlement à la direction longitudinale du manchon (6) et une seconde arête (8B) est parallèle et adjacente à une face inférieure du manchon (6) de telle sorte que, dans le cas où le fil (4) n'est pas serré, le premier passage (5) se trouve à proximité de l'angle entre la première arête et le côté incliné (8C) de l'évidemment triangulaire (8).

5. Dispositif (1) selon la revendication 1, 2, 3 ou 4, dans lequel le premier passage (5) est allongé et s'étend du côté supérieur du boîtier (2).

6. Dispositif (1) selon la revendication 2, 3, 4 ou 5, dans lequel le boîtier (2) et le côté intérieur du manchon (6) sont de forme cylindrique.

7. Dispositif (11) selon la revendication 1, **caractérisé en ce que** les moyens de distribution de fil comprennent un élément coulissant (16) qui fait saillie dans le premier passage (15) et qui peut coulisser le long du côté extérieur du boîtier (12) de sorte que l'élément coulissant (16) est mobile entre une première position, dans laquelle le fil (14) est relâché, et une seconde position dans laquelle le fil (14) est serré entre l'élément coulissant (16) et le côté extérieur du boîtier (12).

8. Dispositif (11) selon la revendication 7, dans lequel le premier passage (15) est pourvu d'un premier canal (18) qui s'étend sensiblement en direction du côté longitudinal du boîtier (12) et le premier canal (18) est configuré pour guider l'élément coulissant (16) vers la deuxième position.

9. Dispositif (11) selon la revendication 7 ou 8, dans lequel le premier passage (15) est pourvu d'un second canal (19) dirigé loin du premier canal (18) et configuré pour guider l'élément coulissant (16) vers la première position.
